# EUROPEAN PATENT APPLICATION

(11) **EP 4 835 322 A1**
(43) Date of publication of application: **04.11.2026**
(21) Application number: 25789346.1
(22) Date of filing: 31.03.2025
(51) Int. Cl.: F16H 1/32

(54) **RV SPEED REDUCER, AND MOUNTING METHOD THEREFOR, AND INDUSTRIAL ROBOT**

(30) Priority: 15.04.2024 CN 202410446190
(71) Applicant: Guangdong Jiya Precision Machinery Technology Co., Ltd., Foshan, Guangdong 528311 (CN); Midea Group Co., Ltd., Foshan, Guangdong 528311 (CN); KUKA Robotics Automation (Guangdong) Co., Ltd., Foshan, Guangdong 528311 (CN)
(72) Inventor: ZHU, Shiyuan, Foshan, Guangdong 528311 (CN); XIAO, Dong, Foshan, Guangdong 528311 (CN); ZHAO, Sheng, Foshan, Guangdong 528311 (CN)
(74) Representative: Ran, Handong
(86) International application number: PCT/CN2025/086138
(87) International publication number: WO 2025/218477

(57) **Abstract**

An RV reducer and a mounting method therefor, and an industrial robot. The RV reducer (1000) comprises a pin housing (100), a planet carrier (200), a crankshaft (300), a cycloidal gear (400), a tube body (500), a limiting member (600), and a sealing member (215). By providing the planet carrier (200) in the pin housing (100), the crankshaft (300) is supported on the planet carrier (200) and configured to drive the cycloidal gear (400) to swing. The planet carrier (200) comprises an output flange (210) and a support flange (220) which are connected to each other, wherein the output flange (210) is provided with a first central hole (212), and the support flange (220) is provided with a second central hole (221). The cycloidal gear (400) is provided with a third central hole (430). The tube body (500) passes through the first central hole (212), the second central hole (221) and the third central hole (430).

## Description

### CROSS-REFERENCE TO RELATED APPLICATIONS

This application claims priority to Chinese Patent Application No. 202410446190.3, filed on April 15, 2024, entitled "RV REDUCER AND INSTALLATION METHOD THEREFOR, AND INDUSTRIAL ROBOT," the entire contents of which are incorporated herein by reference.

### TECHNICAL FIELD

The present disclosure relates to the technical field of precision reducers, and in particular to an RV reducer and an installation method therefor, and an industrial robot.

### BACKGROUND

A rotary vector (RV) reducer is a component commonly used in industrial robots. A low-speed tube is installed at a central position of the RV reducer for routing cables. In order to prevent the low-speed tube from moving relative to the planet carrier, according to one scheme in the related art a retaining ring is configured to position the low-speed tube. However, in this scheme of the RV reducer, a support flange must be installed after the low-speed tube, thereby posing significant assembly challenges and hindering automated assembly. According to another scheme in the related art, a sealing ring is simultaneously embedded in the low-speed tube and the support flange for limiting movement. However, in this scheme, a press machine and tooling are required to install the low-speed tube, resulting in great installation difficulty.

### SUMMARY

The present disclosure aims to solve at least one of the technical problems in the existing technology. To this end, the present disclosure provides an RV reducer in which a tube is conveniently installed and displacement and rotation of the tube can be restricted.

The present disclosure further provides an installation method for the above RV reducer.

The present disclosure further provides an industrial robot having the above RV reducer.

According to an embodiment of a first aspect of the present disclosure, an RV reducer includes: a pin housing; a planet carrier disposed in the pin housing and rotatable relative to the pin housing, where the planet carrier includes an output flange and a support flange, the output flange includes a plurality of pillars which are arranged around a circumference of the planet carrier and fixedly connected to the support flange, the output flange has a first central hole, the output flange has a recess on a side facing towards the support flange, and the support flange has a second central hole coaxial with the first central hole; a plurality of crankshafts rotatably supported on the planet carrier, each of the plurality of crankshaft including an eccentric portion; a cycloidal disc connected to the eccentric portions of the plurality of crankshafts so as to be capable of oscillating and rotating in the pin housing, where the cycloidal disc has a plurality of through holes equal in number to the plurality of pillars, the plurality of pillars respectively extend through the plurality of through holes of the cycloidal disc, and the cycloidal disc has a third central hole; a tube extending through the first central hole, the third central hole and the second central hole, where one end of the tube abuts against a bottom wall of the recess to limit movement of the tube in a first direction, an outer peripheral wall of the tube has a boss, and a side of the boss facing away from the output flange has a first mounting wall along an axial direction of the tube; a limiting member fixedly connected to the support flange, where the limiting member is capable of abutting against the first mounting wall to limit movement of the tube in a second direction opposite to the first direction; and a sealing member installed between the tube and a side wall of the recess and capable of restricting rotation of the tube relative to the planet carrier.

The RV reducer according to embodiments of the present disclosure has at least the following beneficial effects.

Due to the planet carrier in the pin housing, the plurality of crankshafts are supported on the planet carrier and configured to drive the cycloidal disc to oscillate. The planet carrier includes an output flange and a support flange connected to each other. The output flange has a first central hole. The support flange has a second central hole. The cycloidal disc has a third central hole. The tube extends through the first central hole, the second central hole and the third central hole. The tube is restricted by the recess of the output flange, the limiting member and the sealing member, such that movement and rotation of the tube relative to the planet carrier can be restricted, i.e., the tube is stationary relative to the planet carrier. Therefore, cables and other structures can pass through the RV reducer via the tube, thereby facilitating the cables layout. Because the limiting member is installed after the tube, the support flange can be installed prior to the tube, without altering an original assembly sequence of the RV reducer, thereby accommodating existing assembly procedures and reducing the cost of production line adjustment. During the process of inserting the tube until abutting against the bottom wall of the recess, the limiting member has not yet been installed on the support flange, so that the tube can be smoothly installed to the bottom wall of the recess. Thereafter, because the side of the boss and the side of the support flange that face away from the output flange are both in an open state, the limiting member can be conveniently installed on the support flange without the aid of a press machine and a corresponding tool, thereby reducing the assembly difficulty and improving the assembly efficiency.

According to some embodiments of the present disclosure, the tube is configured to be inserted in the first direction until abutting against the bottom wall of the recess, and movement of the tube is restricted by the limiting member upon installation.

According to some embodiments of the present disclosure, a side of the support flange facing away from the output flange has a second mounting wall, and the limiting member is capable of abutting against both the first mounting wall and the second mounting wall.

According to some embodiments of the present disclosure, the limiting member includes a fastener and a washer. The washer abuts against both the first mounting wall and the second mounting wall on a side thereof along the first direction, and the fastener is configured to fixedly connect the washer and the support flange.

According to some embodiments of the present disclosure, the washer is configured to apply a preload to the boss along the first direction.

According to some embodiments of the present disclosure, the first mounting wall protrudes beyond the second mounting wall along the axial direction of the tube.

According to some embodiments of the present disclosure, the limiting member includes a fastener and an annular plate is disposed around an outer side of the tube. The annular plate abuts against both the first mounting wall and the second mounting wall on a side thereof along the first direction, and the fastener is configured to fixedly connect the annular plate and the support flange.

According to some embodiments of the present disclosure, the limiting member is detachably connected to the support flange.

According to some embodiments of the present disclosure, the side wall of the recess has a groove, and the sealing member is installed in the groove and abuts against the outer peripheral wall of the tube.

According to some embodiments of the present disclosure, the tube is formed by cutting a metal tube having a wall thickness of 3 mm to 10 mm.

According to some embodiments of the present disclosure, the output flange has a mounting feature, which is formed at an end of the output flange facing away from the support flange and extends to the bottom wall of the recess.

According to some embodiments of the present disclosure, an outer profile of a cross-section of the mounting feature is an outwardly convex arc.

According to an embodiment of a second aspect of the present disclosure, an installation method for the RV reducer of the first aspect includes: assembling the pin housing, the planet carrier, the plurality of crankshafts and the cycloidal disc, and installing the sealing member to the side wall of the recess of the output flange; inserting the tube in the first direction until abutting against the bottom wall of the recess; installing the limiting member on the support flange such that the limiting member abuts against the boss of the tube; and installing a double gear on the support flange.

The installation method for the RV reducer according to embodiments of the present disclosure has at least the following beneficial effects.

Due to the recess of the output flange which limits displacement of the tube in the first direction and the limiting member which limits displacement of the tube in the second direction, the support flange can be installed prior to the tube without altering an original assembly sequence of the RV reducer, thereby accommodating existing assembly procedures and reducing production cost. During the process of inserting the tube until abutting against the bottom wall of the recess, the limiting member has not yet been installed on the support flange, so that the tube can be smoothly installed to the bottom wall of the recess. Thereafter, because the side of the boss and the side of the support flange that face away from the output flange are both in an open state, the limiting member can be conveniently installed on the support flange without the aid of a press machine and a corresponding tool, thereby reducing the assembly difficulty and improving the assembly efficiency.

According to an embodiment of a third aspect of the present disclosure an industrial robot includes the RV reducer of the above embodiments.

The industrial robot according to embodiments of the present disclosure has at least the following beneficial effects.

In the RV reducer of the embodiments of the first aspect, a planet carrier is disposed in the pin housing, and a plurality of crankshafts supported on the planet carrier are configured to drive a cycloidal disc to oscillate. The planet carrier includes an output flange and a support flange connected to each other. The output flange has a first central hole. The support flange has a second central hole The cycloidal disc has a third central hole. The tube extends through the first central hole, the second central hole and the third central hole. The tube is restricted by the recess of the output flange, the limiting member and the sealing member, such that movement and rotation of the tube relative to the planet carrier can be restricted, making the tube stationary relative to the planet carrier. Therefore, cables and other structures can pass through the RV reducer via the tube, thereby facilitating cable layout. Because the limiting member is installed after the tube, the support flange can be installed prior to the tube, without altering an original assembly sequence of the RV reducer, thereby accommodating existing assembly procedures and reducing the cost of production line adjustment. During the process of inserting the tube until abutting against the bottom wall of the recess, the limiting member has not yet been installed on the support flange, so that the tube can be smoothly installed to the bottom wall of the recess. Thereafter, because the side of the boss and the side of the support flange that face away from the output flange are both in an open state, the limiting member can be conveniently installed on the support flange without the aid of a press machine and a corresponding tool, thereby reducing the assembly difficulty and improving the assembly efficiency.

Additional aspects and advantages of the present disclosure will be described in the description below, and will become apparent in part from the description below, or may be learned through practice of the present disclosure.

### BRIEF DESCRIPTION OF DRAWINGS

The present disclosure will be further described below in conjunction with the accompanying drawings and embodiments, in which:
FIG. 1 is a sectional view of an RV reducer according to an embodiment of the present disclosure;
FIG. 2 is a schematic structural view of a pin housing according to an embodiment of the present disclosure;
FIG. 3 is a structural sectional view of a tube according to an embodiment of the present disclosure;
FIG. 4 is a sectional view of an RV reducer with some parts omitted according to an embodiment of the present disclosure;
FIG. 5 is an enlarged view of portion A in FIG. 4;
FIG. 6 is an enlarged view of portion B in FIG. 1;
FIG. 7 is an enlarged view of portion C in FIG. 4;
FIG. 8 is a schematic structural view of an RV reducer according to an embodiment of the present disclosure;
FIG. 9 is a schematic structural view of a limiting member according to an embodiment of the present disclosure;
FIG. 10 is a schematic structural view of an RV reducer according to another embodiment of the present disclosure;
FIG. 11 is a schematic structural view of a limiting member according to another embodiment of the present disclosure;
FIG. 12 is a flow chart of an installation method for an RV reducer according to an embodiment of the present disclosure; and
FIG. 13 is a schematic view showing placement of an RV reducer according to an embodiment of the present disclosure.

### Reference Numerals:

RV reducer 1000;
pin housing 100; inner hole 110; pin teeth groove 120; main bearing 130;
planet carrier 200; output flange 210; first central hole 212; recess 213; groove 214; sealing member 215; mounting feature 216; support flange 220; second central hole 221; second mounting wall 222; protrusion 223; mounting hole 224; double gear 230; planet gear 240;
crankshaft 300; eccentric portion 310;
cycloidal disc 400; third central hole 430;
tube 500; boss 510; first mounting wall 511;
limiting member 600; fastener 610; washer 620; annular plate 630;
input shaft assembly 700.

### DETAILED DESCRIPTION

Embodiments of the present disclosure will be described in detail hereinafter in conjunction with accompanying drawings in which the same or like reference numerals refer to the same or like elements or elements having the same or like functions throughout. The embodiments described below by reference to the accompanying drawings are illustrative and are intended for illustrating only and are not to be construed as limiting the present disclosure.

In the description of the present disclosure, it should be understood that for the description of orientations, the orientation or positional relationships indicated by the terms such as "up" and "down" are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

In the description of the present disclosure, "multiple" and "a plurality of" mean two or more. If used herein, the terms such as "first," "second" and the like are merely used for distinguishing technical features, and are not intended to indicate or imply relative importance, or implicitly point out the number of the indicated technical features, or implicitly point out the order of the indicated technical features.

In the description of the present disclosure, unless otherwise explicitly defined, the terms such as "configure," "install/mount" and "connect" should be understood in a broad sense, and those having ordinary skills in the art can reasonably determine the specific meanings of the above terms in the present disclosure based on the specific contents of the technical scheme.

An RV reducer includes a two-stage reduction mechanism: a first stage of a planetary gear reduction mechanism, and a second stage of a cycloidal pinwheel reduction mechanism. The RV reducer has a series of advantages such as compact size, light weight, large transmission ratio range, long service life, stable precision retention, high efficiency, and smooth transmission, so it is widely used in fields such as industrial robots, machine tools, medical inspection equipment, and satellite receiving systems. When an RV reducer is installed at a joint of an industrial robot, in order to enable cables of the industrial robot to safely pass through the RV reducer, a middle portion of the RV reducer has a hollow low-speed tube therein. The low-speed tube is configured to isolate the cables from internal moving components of the RV reducer, thereby preventing the cables from being damaged by the moving components.

In the related art, according to an installation scheme of the low-speed tube with a retaining ring for positioning, the low-speed tube is configured to be prevented from disengaging from the RV reducer by abutment of the support flange and the low-speed tube. Therefore, the low-speed tube must be installed before the support flange during assembly. However, installing the low-speed tube before the support flange reduces the assembly space for the support flange and increases the assembly difficulty of the support flange. Moreover, since not all RV reducers have a low-speed tube, the assembly sequence for the components excluding the low-speed tube has become conventional practice. A scheme where the low-speed tube is installed before the support flange essentially inserts a new step into the existing assembly process, and it will change the existing assembly sequence and greatly affect the logic of automated assembly, thereby significantly increasing the cost of production line retrofit and reducing the flexibility of the production line.

According to another installation scheme of the low-speed tube in the related art, annular grooves for accommodating an O-ring are respectively provided on the low-speed tube and the support flange in a corresponding manner, and the O-rings embedded in the annular grooves prevents the low-speed tube from disengaging from the RV reducer. However, since the O-ring has a vibration-damping effect, the low-speed tube cannot be hammered into the RV reducer during assembly. Consequently, a press machine and specially designed tooling are required for assistance, resulting in great assembly and disassembly difficulty. In addition, an annular groove on an outer wall of the low-speed tube requires an increased wall thickness to ensure sufficient strength and machinability at the annular groove, thereby increasing the production cost and prevent the lightweight requirement of the RV reducer.

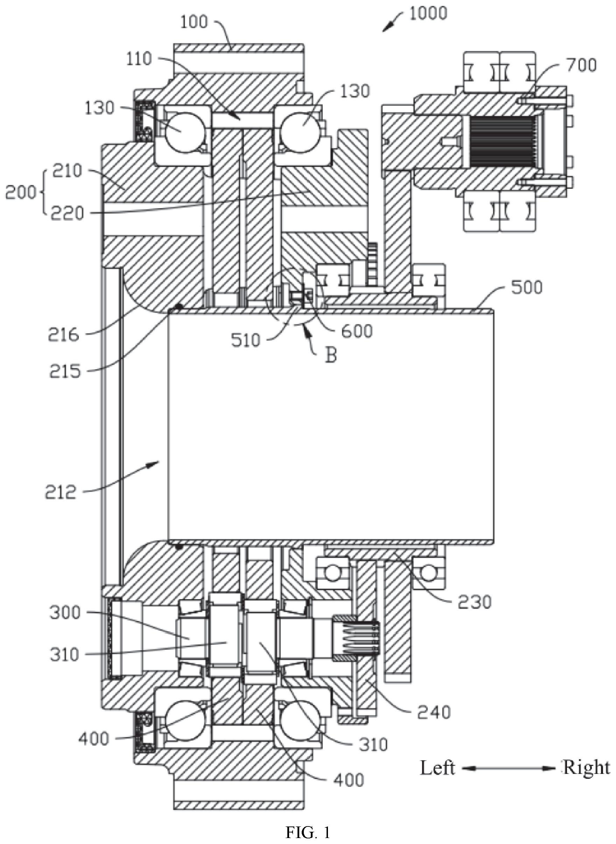

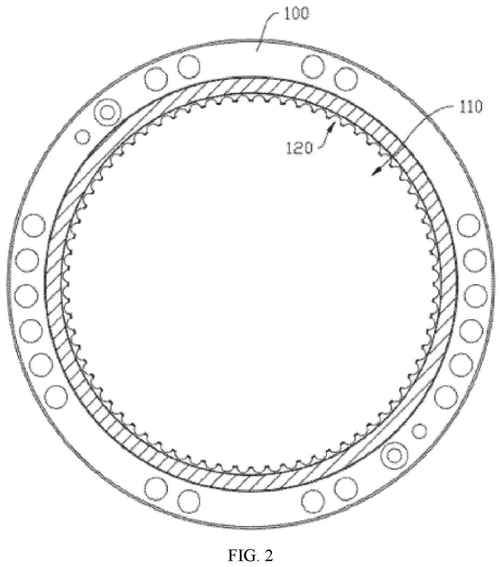

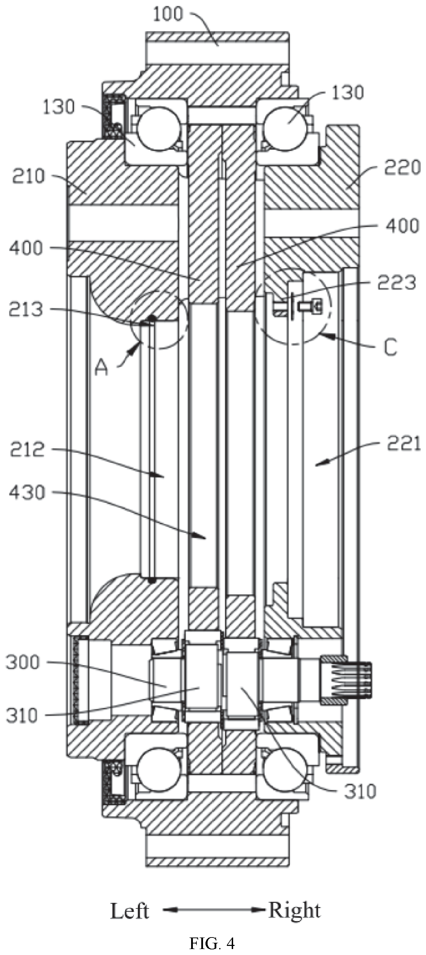

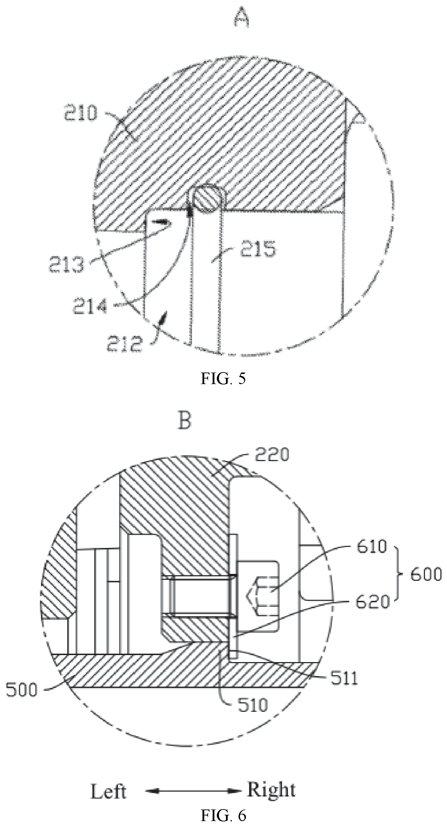

In order to solve the above problems, referring to FIG. 1, an RV reducer 1000 according to an embodiment of the present disclosure includes a pin housing 100, a planet carrier 200, a plurality of crankshafts 300, a cycloidal disc 400, a tube 500 (corresponding to the aforementioned low-speed tube), a limiting member 600 and a sealing member 215. Referring to FIG. 2, the pin housing 100 has an inner hole 110, and an inner wall of the inner hole 110 has a plurality of pin teeth grooves 120 around a circumferential wall of the inner hole 110. Referring to FIG. 1, the planet carrier 200 is disposed inside the pin housing 100 and rotatable relative to the pin housing 100. The planet carrier 200 includes an output flange 210 and a support flange 220 which includes a plurality of pillars spaced apart around a circumference of the planet carrier 200, and the plurality of pillars are fixedly connected to the support flange 220. Referring to FIGS. 4 and 5, the output flange 210 has a first central hole 212, and the output flange 210 has a recess 213 on a side facing the support flange 220. The recess 213 is located in an inner wall of the first central hole 212 and communicated with the first central hole 212. The support flange 220 has a second central hole 221 coaxial with the first central hole 212.

Referring to FIG. 1, the plurality of crankshafts 300 are supported on the planet carrier 200 and rotatable relative to the planet carrier 200. Each of the plurality of crankshaft 300 includes an eccentric portion 310. The cycloidal disc 400 is sleeved on the eccentric portions 310 of the crankshafts 300 and is capable of oscillating relative to the pin housing 100. The cycloidal disc 400 has a plurality of through holes equal in number to the pillars, for example, both the through holes and the pillars being three or six in number, and a specific number is selected as appropriate according to actual conditions. The pillars respectively extend through the plurality of through holes of the cycloidal disc 400, and the cycloidal disc 400 has a third central hole 430. The third central hole 430, the second central hole 221 and the first central hole 212 are in communication with one another. An outer peripheral wall of the cycloidal disc 400 has a plurality of teeth which mesh with the plurality of pin teeth grooves 120 via pins, respectively. In this embodiment, two cycloidal discs 400 are side by side along an axial direction of the RV reducer 1000 and disposed in 180° central symmetry, i.e., a phase difference between the two cycloidal discs 400 is 180°.

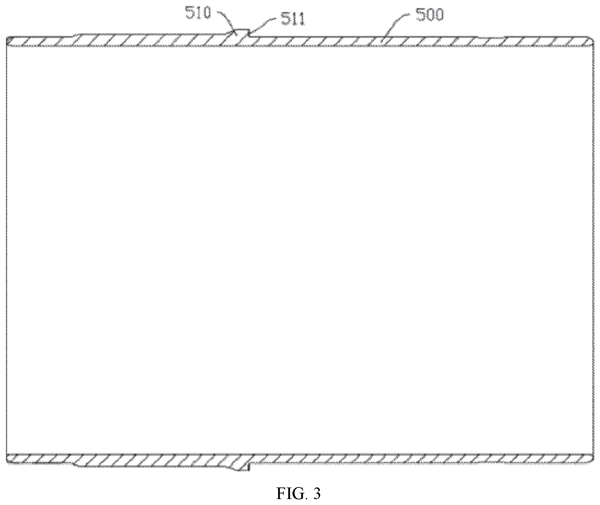

Referring to FIGS. 1 and 3, the tube 500 extends through the first central hole 212, the second central hole 221 and the third central hole 430. One end of the tube 500 abuts against a bottom wall of the recess 213, thereby limiting displacement of the tube 500 in a first direction which is a direction from the support flange 220 toward the output flange 210, for example, a right-to-left direction in FIG. 1. An outer peripheral wall of the tube 500 has a boss 510 which may surround the outer peripheral wall of the tube 500, i.e., form an annular boss. Alternatively, a plurality of bosses 510 are spaced apart around the outer peripheral wall of the tube 500. Along an axial direction of the tube 500, a first mounting wall 511 is on a side of the boss 510 facing away from the output flange 210.

Referring to FIG. 6, the limiting member 600 is fixedly connected to the support flange 220, and the limiting member 600 abuts against the first mounting wall 511 to limit displacement of the tube 500 in a second direction. In this embodiment, the second direction is opposite to the first direction, for example, the second direction is a left-to-right direction in FIG. 1. Referring to FIG. 1, the sealing member 215 is mounted between the tube 500 and a side wall of the recess 213 and is configured for sealing and restricting rotation of the tube 500 relative to the planet carrier 200. For example, the sealing member 215 may be an O-ring, or another element capable of achieving sealing and increasing friction between the tube 500 and the planet carrier 200. In order to reliably suppress rotation of the tube 500, the first mounting wall 511 may project slightly beyond a second mounting wall 222 toward the right, such that a washer 620 applies a preload to the tube 500 along the first direction. The tube 500 and the planet carrier 200 have no relative rotation, i.e., they are in a relatively stationary state, thereby reducing friction loss caused by relative rotation, and preventing metal powder generated by friction from entering moving components, which would otherwise cause further aggravated wear and affect the service life of the RV reducer 1000. Cables can be routed through the tube 500, thereby avoiding contact of the cables with components such as the cycloidal disc 400, the double gear 230 and the planet gear 240, and improving the safety and rationality of cable routing layout.

According to the above scheme, an outer wall of the tube 500 has the boss 510 rather than an annular groove, such that structural stability of the tube 500 can be ensured without increasing the wall thickness of the tube 500, thereby reducing the production cost. Because the recess 213 of the output flange 210 is configured to limit displacement of the tube 500 in the first direction, and the limiting member 600 is configured to limit displacement of the tube 500 in the second direction, the support flange 220 can be installed before the tube 500, i.e., the original assembly sequence of the RV reducer 1000 can be maintained to allow for compatibility with existing manufacturing processes, thereby reducing the cost of production line adjustment. Additionally, because the RV reducer 1000 does not require a press machine or a special tool for installation, there is no need to transport the RV reducer 1000 to the press machine, thereby simplifying the assembly steps and improving the assembly efficiency.

Referring to FIG. 1, in the embodiment of the present disclosure, the tube 500 is configured to be inserted in the second direction until abutting against the bottom wall of the recess 213, and movement of the tube is restricted by the limiting member 600 upon installation. Because the limiting member 600 is installed after the tube 500, during the process of inserting the tube 500 into the bottom wall of the recess 213, the limiting member 600 has not yet been installed on the support flange 220. Therefore, the limiting member 600 does not interfere with installation of the tube 500, and the tube 500 can be smoothly installed to the bottom wall of the recess 213. Thereafter, since the side of the boss 510 and a side of the support flange 220 that face away from the output flange 210 are both in an open state, the limiting member 600 can be conveniently installed on the support flange 220, thereby reducing the assembly difficulty and improving the assembly efficiency.

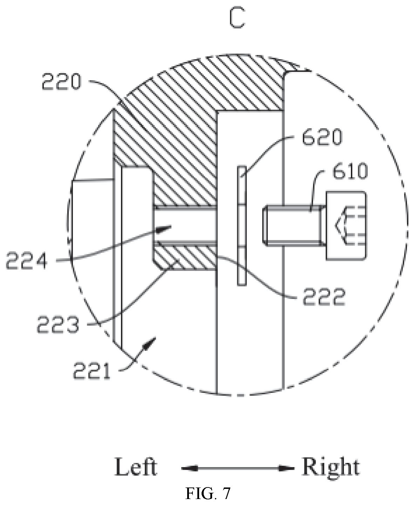

Referring to FIG. 7, in the embodiment of the present disclosure, the side of the support flange 220 facing away from the output flange 210 has the second mounting wall 222, and the limiting member 600 abuts against both the first mounting wall 511 and the second mounting wall 222. For example, an inner wall of the second central hole 221 of the support flange 220 has a protrusion 223, which extends circumferentially around the second central hole 221. On a side of the protrusion 223 facing away from the output flange 210, i.e., a right side of the protrusion 223, has the second mounting wall 222. Due to the protrusion 223, only the right side of the protrusion 223 needs to be finish-machined, thereby simplifying the manufacturing process and improving the production efficiency.

Referring to FIGS. 6 and 7, the protrusion 223 further has a mounting hole 224, and an axis of the mounting hole 224 is parallel to an axis of the second central hole 221. The limiting member 600 includes a fastener 610 and the washer 620. The washer 620 is annular, and the fastener 610 may be a screw, a bolt, a dowel pin or the like. The washer 620 abuts against both the first mounting wall 511 and the second mounting wall 222 on a side thereof along the first direction, and the fastener 610 extends through the washer 620 and the mounting hole 224 and fixes the washer 620 on the support flange 220, so as to restrict relative displacement between the washer 620 and the support flange 220 and displacement of the tube 500 in the second direction. For example, the washer 620 undergoes slight deformation under the action of the fastener 610, thereby being capable of applying a preload to the boss 510 along the first direction, i.e., the washer 620 provides a preload to the tube 500 toward the output flange 210, effectively preventing the tube 500 from rotating about an axis thereof. For example, in order to apply a preload to the boss 510 along the first direction, the washer 620 may be a spring washer having an elastic function, or a non-standard part protruding toward the first mounting wall 511 of the boss 510. Alternatively, the first mounting wall 511 may protrude slightly beyond the second mounting wall 222 toward the right.

In one embodiment of the present disclosure, the washer 620 may be a standard part, for example, a plain washer conforming to a national standard, which is technologically mature, low in cost and high in reliability. In a case that a screw extends through the washer 620, the screw extends through the washer 620 and is threadedly connected to the mounting hole 224. The washer 620 itself can improve the stability of the screw connection and reduce the possibility of the screw loosening and detachment. Meanwhile, the washer 620 can abut against the first mounting wall 511 of the boss 510, thereby restricting displacement of the tube 500 in the second direction. Therefore, the limiting member 600 has a rational structural design, enabling reduced number of required parts, and improved assembly efficiency.

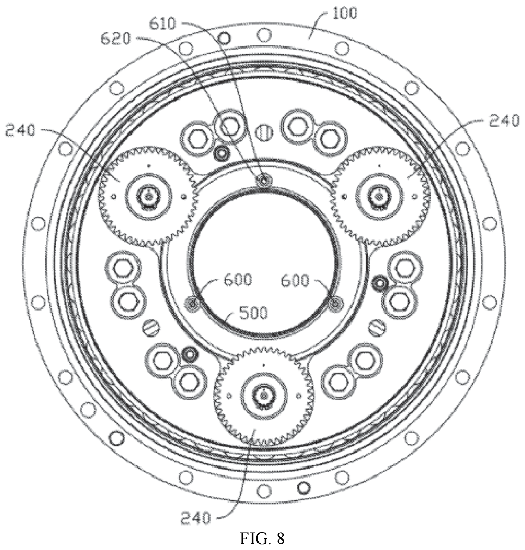

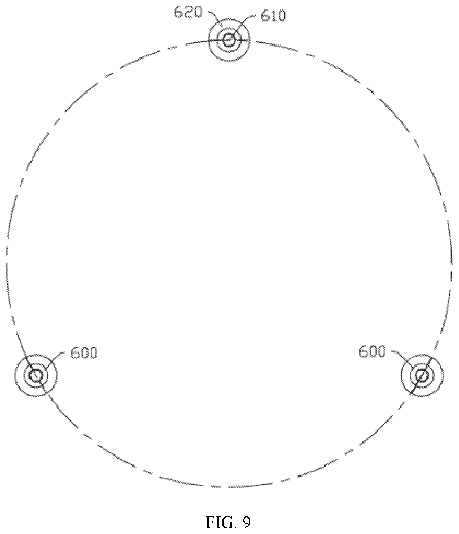

Referring to FIGS. 8 and 9, in the embodiment of the present disclosure, a plurality of mounting holes 224 are spaced apart around a circumference of the protrusion 223. Correspondingly, there are a plurality of washers 620 and fasteners 610, and the number of the plurality of washers 620 is the same as the plurality of number of the mounting holes 224, for example, both being three. The plurality of washers 620 and limiting members 600 further improve the stability of limiting the tube 500, effectively reduce the occurrence of loosening or detachment of the tube 500, thereby enhancing the reliability and stability of the RV reducer 1000.

Referring to FIG. 6, in the embodiment of the present disclosure, along the axial direction of the tube 500, the first mounting wall 511 may protrude slightly beyond the second mounting wall 222 toward the right. Therefore, when the washer 620 abuts against both the first mounting wall 511 and the second mounting wall 222, since the first mounting wall 511 and the second mounting wall 222 are not flush, the washer 620 is forced to undergo slight deformation, thereby providing a preload to the tube 500 toward the output flange 210, and effectively suppressing rotation of the tube 500.

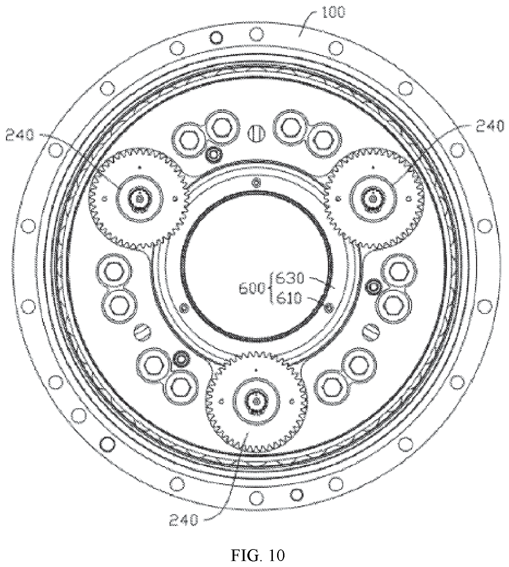

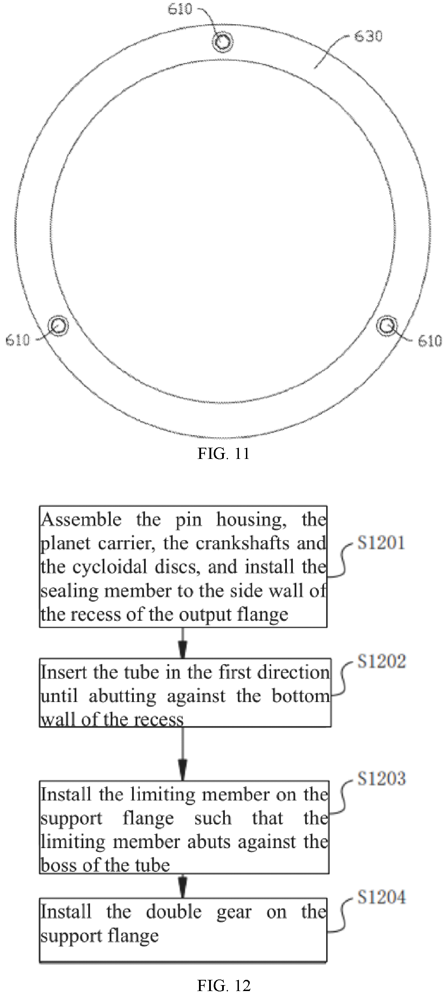

Referring to FIGS. 10 and 11, in another embodiment of the present disclosure, the limiting member 600 includes a fastener 610 and an annular plate 630 sleeved on the tube 500, i.e., the annular plate 630 is disposed around an outer side of the tube 500. The fastener 610 extends through the annular plate 630 and is fixedly connected to the support flange 220, and causes the annular plate 630 to abut against both the first mounting wall 511 and the second mounting wall 222 on a side thereof along the first direction, such that the annular plate 630 and the support flange 220 are fixed relative to each other. It can be understood that the scheme adopting the annular plate 630 can effectively restrict displacement of the tube 500 in the second direction, avoid detachment of the tube 500, and improve the overall reliability of the RV reducer 1000.

In the embodiment of the present disclosure, the limiting member 600 is detachably connected to the support flange 220. When the tube 500 has to be removed, the limiting member 600 can be detached and then the tube 500 can be pulled out, so as to replace or clean the tube 500, thereby satisfying use requirements under different conditions.

Referring to FIG. 5, in the embodiment of the present disclosure, the side wall of the recess 213 has a groove 214 extending around the side wall, i.e., the groove 214 is annular. The sealing member 215 is mounted in the groove 214 to abut against the outer peripheral wall of the tube 500. The sealing member 215 may be made of an elastic material such as rubber to increase friction, thereby restricting rotation of the tube 500 relative to the planet carrier 200.

In the embodiment of the present disclosure, the tube 500 is made of a metal tube. Because the tube 500 does not need to have a groove for accommodating the sealing member 215, the wall thickness of the tube 500 is relatively small. In addition, due to no flange for mounting a screw, the tube has a shape close to a standard pipe. In this embodiment, the tube 500 may be machined from a seamless steel tube having a wall thickness of 3 mm to 10 mm. Therefore, less material removal is required, resulting in high machining efficiency and low cost.

In a case that the RV reducer 1000 is applied in an industrial robot, the industrial robot will drive cables to move during operation. Therefore, even if the tube 500 and the planet carrier 200 do not undergo relative displacement, a portion of the cables where it goes in and out of the RV reducer 1000 is still prone to wear. Referring to FIG. 1, in the embodiment of the present disclosure, the output flange 210 has a mounting feature 216 to further mitigate wear of the cables at the exit. The mounting feature 216 is formed at an end of the output flange 210 facing away from the support flange 220, i.e., an outward-facing end of the output flange 210 has the mounting feature 216, and the mounting feature 216 extends to the bottom wall of the recess 213. It should be noted that the mounting feature 216 is configured for mounting a protective sleeve. When the cable goes in and out of the tube 500, it comes into contact with the protective sleeve, thereby reducing wear of the cable and improving the reliability and service life of the cable. An outer profile of a cross-section of the mounting feature 216 is an outwardly convex arc, thereby avoiding a sharp edge that would cause cable cutting. In another embodiment, the outer profile of the cross-section of the mounting feature 216 may also be a beveled edge, i.e., an opening of the mounting feature 216 is funnel-shaped. A specific shape is selected as appropriate according to actual conditions.

Referring to FIG. 12, an installation method for the RV reducer 1000 of the above embodiments includes following steps.

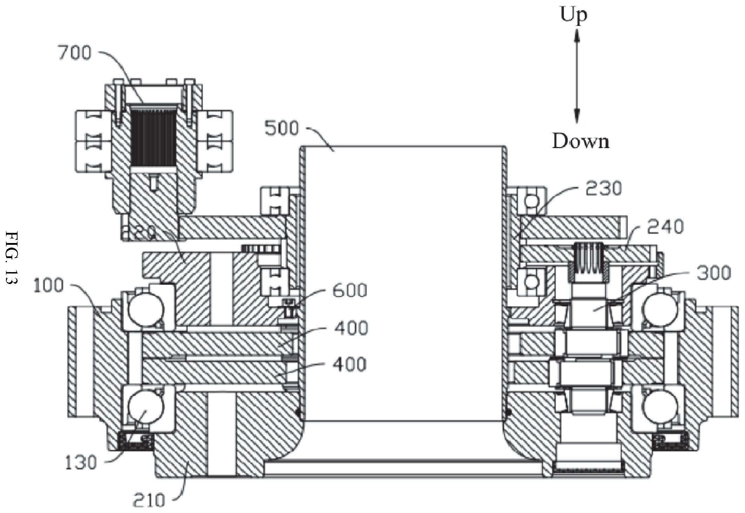

In a step of S1201, the pin housing 100, the planet carrier 200, the crankshafts 300 and the cycloidal discs 400 are assembled, and the sealing member 215 is installed to the side wall of the recess 213 of the output flange 210. The sealing member 215 may be installed in the output flange 210 of the planet carrier 200 before or after the crankshafts 300, the pin housing 100, the cycloidal discs 400 and other structures have been assembled. Referring to FIG. 13, because the output flange 210 has a relatively large weight, the output flange 210 is generally placed on a workbench in the orientation shown in FIG. 13 first, and then the main bearing 130, the pin housing 100, the crankshafts 300, the cycloidal discs 400, the support flange 220 and the like are installed on the output flange 210. During this process, the position of the output flange 210 does not need to be adjusted, thereby simplifying the installation steps and improving the installation efficiency.

In a step of S1202, the tube 500 is inserted in the first direction until it abuts against the bottom wall of the recess 213. In this case, the first direction refers to a top-to-bottom direction as shown in FIG. 13, such that the tube 500 can be conveniently installed without changing the position of the output flange 210 or turning the output flange 210 over.

In a step of S1203. the limiting member 600 is installed on the support flange 220 such that the limiting member abuts against the boss 510 of the tube 500. In this case, the first mounting wall 511 is open upward, the washer 620 of the limiting member 600 is placed on an upward-facing side of the support flange 220, and the washer 620 is fixed on the support flange 220 by the fastener 610, such that the washer 620 abuts against the boss 510, thereby restricting the position of the tube 500. Therefore, the limiting member 600 is simple and convenient to install.

In a step of S1204, the double gear 230 is installed on the support flange 220. The double gear 230 is sleeved on the tube 500 and is rotatable relative to the tube 500. The double gear 230 is installed on the support flange 220 via a bearing. Planet gears 240 are installed on the crankshafts 300, and each crankshaft 300 has one planet gear 240 correspondingly installed thereon, such that the plurality of planet gears 240 mesh with the double gear 230. The double gear 230 can be driven by an input shaft assembly 700, and then sequentially drives the planet gears 240 and the crankshafts 300 to rotate.

Due to the above installation method, other structures can be assembled without substantially changing the position of the output flange 210, and the output flange 210 does not need to be turned over when installing the tube 500. Therefore, the assembly steps can be simplified and the assembly efficiency can be improved.

An industrial robot according to an embodiment of the present disclosure includes the RV reducer 1000 of the above embodiments. The industrial robot may be a handling robot, a welding robot, an assembly robot, a machining robot, a spraying robot, a cleanroom robot, a collaborative robot, or the like.

The industrial robot according to the embodiment of the present disclosure has the RV reducer 1000 of the above embodiment. In the RV reducer 1000, a planet carrier 200 is disposed in the pin housing 100, and a plurality of crankshafts 300 are supported on the planet carrier 200 and configured to drive cycloidal discs 400 to oscillate. The planet carrier 200 includes an output flange 210 and a support flange 220 connected to each other. The output flange 210 has a first central hole 212. The support flange 220 has a second central hole 221. The cycloidal discs 400 each have a third central hole 430. A tube 500 extends through the first central hole 212, the second central hole 221 and the third central holes 430. The tube 500 is restricted by a sealing member 215 and the plurality of limiting members 600 to limit rotation of the tube 500 relative to the planet carrier 200. Therefore, cables and other structures can pass through the RV reducer 1000 via the tube 500, thereby facilitating cables layout. Because a recess 213 of the output flange 210 restricts displacement of the tube 500 in the first direction and the plurality of limiting members 600 restrict displacement of the tube 500 in the second direction, the support flange 220 can be installed prior to the tube 500, without altering an original assembly sequence of the RV reducer 1000, thereby accommodating existing assembly procedures and reducing production cost. During the process of inserting the tube 500 until abutting against a bottom wall of the recess 213, the plurality of limiting members 600 have not yet been installed on the support flange 220, so that the tube 500 can be smoothly installed to the bottom wall of the recess 213. Thereafter, because the side of the boss 510 and the side of the support flange 220 that face away from the output flange 210 are both in an open state, the plurality of limiting members 600 can be conveniently installed on the support flange 220 without the aid of a press machine and a corresponding tool, thereby reducing the assembly difficulty and improving the assembly efficiency.

The industrial robot according to the embodiment of the present disclosure adopts all the technical schemes of the above embodiment of the RV reducer 1000, and therefore has all the beneficial effects brought by the technical schemes of the above embodiment, so that details are not repeated herein.

The above embodiments are described in detail with reference to the accompanying drawings, but the present disclosure is not limited to the above embodiments. Within the knowledge scope of those having ordinary skills in the art, various modifications may be made without departing from the protection scope of the present disclosure.

## Claims

1. A rotary vector, RV, reducer, comprising:
a pin housing;
a planet carrier disposed in the pin housing and rotatable relative to the pin housing, wherein the planet carrier comprises an output flange and a support flange, wherein the output flange comprises a plurality of pillars which are arranged around a circumference of the planet carrier and fixedly connected to the support flange, the output flange has a first central hole and a recess on a side facing towards the support flange, and the support flange has a second central hole coaxial with the first central hole;
a plurality of crankshafts rotatably supported on the planet carrier, each of the plurality of crankshaft comprising an eccentric portion;
a cycloidal disc connected to the eccentric portions of the plurality of crankshafts so as to be capable of oscillating and rotating in the pin housing, wherein the cycloidal disc has a plurality of through holes equal in number to the plurality of pillars, the plurality of pillars respectively extend through the plurality of through holes of the cycloidal disc, and the cycloidal disc has a third central hole;
a tube extending through the first central hole, the third central hole and the second central hole, wherein one end of the tube abuts against a bottom wall of the recess to limit movement of the tube in a first direction, an outer peripheral wall of the tube has a boss, and a side of the boss facing away from the output flange has a first mounting wall along an axial direction of the tube;
a limiting member fixedly connected to the support flange, wherein the limiting member is capable of abutting against the first mounting wall to limit movement of the tube in a second direction opposite to the first direction; and
a sealing member installed between the tube and a side wall of the recess, and capable of restricting rotation of the tube relative to the planet carrier.

2. The RV reducer of claim 1, wherein the tube is configured to be inserted in the first direction until the tube abuts against the bottom wall of the recess, wherein movement and rotation of the tube are restricted by the limiting member upon installation.

3. The RV reducer of claim 1 or 2, wherein a side of the support flange facing away from the output flange has a second mounting wall, and the limiting member is capable of abutting against both the first mounting wall and the second mounting wall.

4. The RV reducer of claim 3, wherein the limiting member comprises a fastener and a washer, the washer abuts against both the first mounting wall and the second mounting wall on a side thereof along the first direction, and the fastener is configured to fixedly connect the washer and the support flange.

5. The RV reducer of claim 4, wherein the washer is configured to apply a preload to the boss along the first direction.

6. The RV reducer of claim 5, wherein the first mounting wall protrudes beyond the second mounting wall along the axial direction of the tube.

7. The RV reducer of any one of claims 3 to 6, wherein the limiting member comprises a fastener and an annular plate, wherein the annular plate is disposed around an outer side of the tube and abuts against both the first mounting wall and the second mounting wall on a side thereof along the first direction, and the fastener is configured to fixedly connect the annular plate and the support flange.

8. The RV reducer of any one of claims 1 to 7, wherein the limiting member is detachably connected to the support flange.

9. The RV reducer of any one of claims 1 to 8, wherein the side wall of the recess has a groove, and the sealing member is installed in the groove and abuts against the outer peripheral wall of the tube.

10. The RV reducer of any one of claims 1 to 9, wherein the tube is formed by cutting a metal tube having a wall thickness of 3 mm to 10 mm.

11. The RV reducer of any one of claims 1 to 10, wherein the output flange has a mounting feature which is formed at an end of the output flange facing away from the support flange and extends to the bottom wall of the recess.

12. The RV reducer of claim 11, wherein an outer profile of a cross-section of the mounting feature is an outwardly convex arc.

13. An installation method for the RV reducer of any one of claims 1 to 12, comprising:
assembling the pin housing, the planet carrier, the crankshafts and the cycloidal disc, and installing the sealing member to the side wall of the recess of the output flange;
inserting the tube in the first direction until abutting against the bottom wall of the recess;
installing the limiting member on the support flange such that the limiting member abuts against the boss of the tube; and
installing a double gear on the support flange.

14. An industrial robot, comprising the RV reducer of any one of claims 1 to 12.
